# EUROPEAN PATENT SPECIFICATION

(11) **EP 3 706 456 B1**
(45) Date of publication and mention of the grant of the patent: **30.08.2023**
(21) Application number: 18872078.3
(22) Date of filing: 01.11.2018
(51) Int. Cl.: H04W 24/04, H04W 24/10, H04L 5/00, H04W 24/08, H04W 76/15

(54) **MULTI-BASE STATION CONNECTION MANAGEMENT METHOD, USER TERMINAL AND COMPUTER READABLE STORAGE MEDIUM**
VERWALTUNGSVERFAHREN FÜR DIE VERBINDUNG MEHRERER BASISSTATIONSSTATIONEN, BENUTZERENDGERÄT UND COMPUTERLESBARES SPEICHERMEDIUM
PROCÉDÉ DE GESTION DE FICHIERS RÉSEAU, TERMINAL ET SUPPORT DE STOCKAGE LISIBLE PAR ORDINATEUR

(30) Priority: 01.11.2017 CN 201711059902
(43) Date of publication of application: 09.09.2020
(73) Proprietor: ZTE Corporation, Shenzhen, Guangdong 518057 (CN)
(72) Inventor: LIU, Wei, Shenzhen Guangdong 518057 (CN)
(74) Representative: Canzler & Bergmeier Patentanwälte Partnerschaft mbB
(86) International application number: PCT/CN2018/113309
(87) International publication number: WO 2019/085959

(56) References cited:
- EP-A1- 3 110 196
- WO-A1-2013/190775
- WO-A1-2016/144055
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.7.1, 29 September 2017 (2017-09-29), pages 1-642, XP051337498, [retrieved on 2017-09-29]
- ERICSSON: "TP on Measurements for TS 38.331", 3GPP TSG-RAN WG2 #NR Ad Hoc Tdoc R2-1707289, 16 June 2017 (2017-06-16), XP051306919,
- MediaTek Inc: "Miscellaneous Issues in TP on RRM", 3GPP TSG-RAN WG2 Meeting #99bis R2-1710797, 29 September 2017 (2017-09-29), XP051355195,
- SAMSUNG: "NR RRM Measurement Configuration", 3GPP TSG-RAN WG2 Ad Hoc Tdoc R2-1707218, 22 June 2017 (2017-06-22), XP051307484,

## Description

### TECHNICAL FIELD

The present application relates to the field of network convergence, for example, to a multi-base station connection management method, a user equipment (UE) and a computer readable storage medium.

### BACKGROUND

In a wireless communication network, a base station delivers measurement reconfiguration signaling to a UE through a cell and performs reporting configurations for a user equipment (UE) in a connected state. The UE performs air interface measurement according to these reporting configurations and sends a report of measurement results to the base station.

Each set of reporting configuration is a combination of one measurement object identity (measObjectId) and one reporting configuration identity (reportConfigId), and is identified by a unique measurement identity (measId). Each measObjectId corresponds to one measurement object, that is, a measurement frequency point at which the UE performs the air interface measurement. Each reportConfigId corresponds to one set of reporting configuration which defines criterion and format configurations of a measurement report.

A 3rd Generation Partnership Project (3GPP) 36.331 protocol defines that measObjectId, reportConfigId and measId are each non-multiplexable resources, that is, the measObjectId, reportConfigId and measId cannot be repeated in measurement delivered by the base station to the UE. In addition, the protocol also stipulates that contents identified by different measObjectIds or measIds cannot be repeated. If the measObjectId, reportConfigId and measId are repeated in the measurement delivered by the base station to the UE, or the contents identified by different measObjectIds or measIds are repeated, an abnormal measurement result or other abnormal behaviors such as re-establishment of the UE may be caused.

In the related art, the UE may be simultaneously connected to two or more base stations. These base stations may belong to a same communication network or different communication networks. One of these base stations serves as a master node (MN), and each of the other base stations serves as a secondary node (SN). In addition to basic measurement, the MN needs to deliver measurement for SN addition to the UE. The SN needs to deliver measurement for SN deletion and modification to the UE. Since there is no negotiation path between the MN and the SN, their independent measurement mechanisms will cause conflicts in the measObjectIds, reportConfigIds and measIds of different measurement received by a UE side, which will cause the abnormal measurement result or other abnormal behaviors of the UE.

European Patent Application EP3110196A1 discloses a method and apparatus for updating a measurement identity and a system. The method includes: checking each measurement identity in a measurement identity list included in a pre-stored measurement configuration variable by terminal equipment after performing connection reconfiguration or connection re-establishment; and removing the measurement identity from the measurement configuration variable by the terminal equipment, if reporting configuration associated with the measurement identity includes a measurement event related to a frequency at which a cell belonging to a secondary cell group of the terminal equipment is operating and a measurement object related to the measurement event no longer satisfies a requirement of the measurement event or a cell for comparing in the measurement event no longer exists. With the method above, meaningless measurement by the terminal equipment is reduced, power consumption is lowered, and interference on normal communications is reduced.

3GPP (3^{rd} Generation Partnership Project) TS (Technical Specification) 36.331 relates to Radio Access Network, Evolved Universal Terrestrial Radio Access (E-UTRA), and Radio Resource Control (RRC).

International Patent Application WO2013190775A1 discloses a method for performing a measurement procedure, in which autonomous removal or modification of measurement objects related to the channel state information reference signal (CSI-RS) is performed, and removal or modification of measurement objects related to the channel state information reference signal (CSI-RS) due to a handover or a successful re-establishment is performed.

### SUMMARY

The following is a summary of the subject matter described herein in detail. This summary is not intended to limit the scope of the claims.

The present application provides a multi-base station connection management method, a user equipment and a computer readable storage medium, which can avoid a conflict between identities of different measurement received by a UE side due to independent measurement mechanisms of an MN and an SN.

The invention is set out in the appended set of claims.

Other aspects can be understood after the drawings and the detailed description are read and understood.

### BRIEF DESCRIPTION OF DRAWINGS

FIG. 1 is a flowchart of a multi-base station connection management method according to the present application;
FIG. 2 is a structural diagram of a multi-base station connection management device according to the present application;
FIG. 3 is a structural diagram of a user equipment according to the present application;
FIG. 4 is a schematic diagram of communication networking involved in the present application;
FIG. 5 is a flowchart of a multi-base station connection management method according to the present application;
FIG. 6 is a method flowchart in a case where measurement object identities conflict according to the present application;
FIG. 7 is a method flowchart in a case where measurement frequency points of measurement objects conflict according to the present application;
FIG. 8 is a method flowchart in a case where reporting configuration identities conflict according to the present application;
FIG. 9 is a method flowchart in a case where measurement identities conflict according to the present application; and
FIG. 10 is a method flowchart in a case where local identity resources are insufficient according to the present application.

### DETAILED DESCRIPTION

The present application is described below in detail in conjunction with the drawings and specific examples. It is to be understood that the specific examples described herein are merely intended to explain the present application and not to limit the present application.

A measurement parameter carried in measurement reconfiguration signaling involved in the present application includes identities, such as a measurement object identity (measObjectId), a reporting configuration identity (reportConfigId) and a measurement identity (measId), and all parameters corresponding to the identities, such as a measurement frequency point, reporting configuration contents, and the measurement object identity and the reporting configuration identity associated with the measurement identity.

For ease of description, in the present application, the measurement object identity (measObjectId), the reporting configuration identity (reportConfigId), the measurement identity (measId) and the like carried in the measurement reconfiguration signaling sent by a cell to a user equipment are recorded as cell identities such as a cell measurement object identity, a cell reporting configuration identity and a cell measurement identity; and a measurement object identity (measObjectId), a reporting configuration identity (reportConfigId), a measurement identity (measId) and the like stored by the user equipment in a local measurement configuration list of a terminal are recorded as local identities such as a local measurement object identity, a local reporting configuration identity and a local measurement identity.

The local measurement configuration list of the terminal involved in the present application refers to a list for recording a local measurement configuration parameter and a local identity corresponding to the local measurement configuration parameter. In the present application, the local measurement configuration list of the terminal stores the measurement object identity (measObjectId), the reporting configuration identity (reportConfigId) and the measurement identity (measId).

A mapping list involved in the present application refers to a list for recording a correspondence between a cell identity in the measurement reconfiguration signaling from the cell and a local identity reallocated by the terminal. In the present application, in an example in which the user equipment is merely connected to two cells of an MN and an SN, that is, the UE accesses a primary secondary cell (Pscell) provided by the SN while accessing a primary cell (Pcell) provided by the MN, the mapping list is stored in the form of 6 lists, including a measurement object identity (measObjectId) mapping list, a reporting configuration identity (reportConfigId) mapping list and a measurement identity (measId) mapping list configured for the Pcell and a measurement object identity (measObjectId) mapping list, a reporting configuration identity (reportConfigId) mapping list and a measurement identity (measId) mapping list configured for the Pscell.

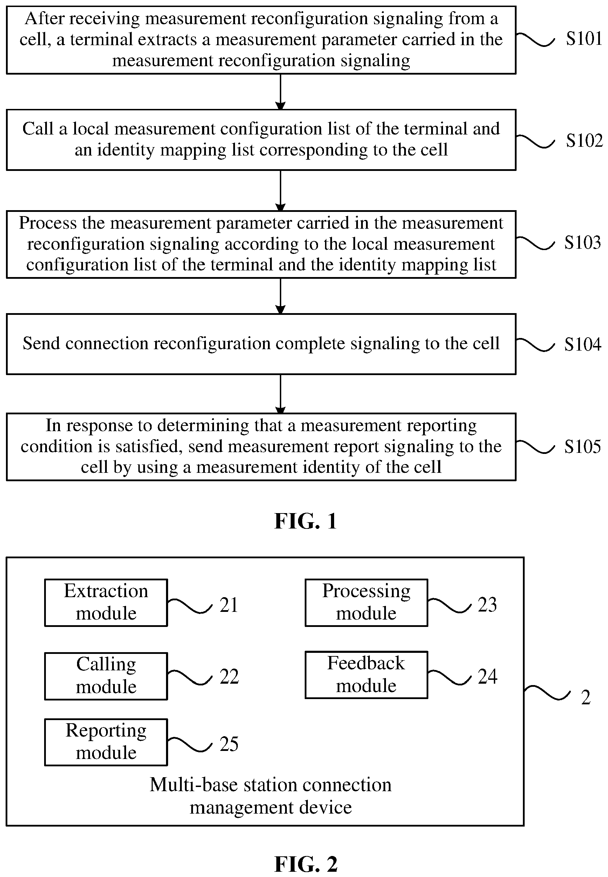

Referring to FIG. 1, a multi-base station connection management method according to the present application includes steps S101 to S 105, which can avoid a conflict between identities of different measurement received by a UE side due to independent measurement mechanisms of an MN and an SN.

In step S101, after receiving measurement reconfiguration signaling from a cell, a terminal extracts a measurement parameter carried in the measurement reconfiguration signaling.

In step S102, a local measurement configuration list of the terminal and an identity mapping list corresponding to the cell are called. The local measurement configuration list is used for recording a local measurement configuration parameter and a local identity corresponding to the local measurement configuration parameter, and the identity mapping list is used for recording a correspondence between a cell identity in the measurement reconfiguration signaling from the cell and a local identity reallocated by the terminal.

In step S 103, the measurement parameter carried in the measurement reconfiguration signaling is processed according to the local measurement configuration list of the terminal and the identity mapping list.

In step S104, connection reconfiguration complete signaling is sent to the cell.

In step S 105, in response to determining that a measurement reporting condition is satisfied, measurement report signaling is sent to the cell by using a measurement identity of the cell.

In some examples of the present application, in a case where the measurement parameter includes a cell measurement object identity of a measurement object to be deleted in the cell, step S103 includes: checking whether a local measurement object identity reallocated to the cell measurement object identity exists in the identity mapping list; in response to existence of the local measurement object identity reallocated to the cell measurement object identity, taking the local measurement object identity as a key value, and in response to absence of the local measurement object identity reallocated to the cell measurement object identity, taking the cell measurement object identity as the key value; and deleting a measurement object corresponding to the key value from the local measurement configuration list of the terminal.

In some examples of the present application, in the case where the measurement parameter includes the cell measurement object identity of the measurement object to be deleted in the cell, step S 103 further includes: checking whether a local measurement object identity associated with another measurement exists as the key value according to the local measurement configuration list of the terminal; in response to existence of the local measurement object identity associated with the another measurement as the key value, not deleting the measurement object corresponding to the key value; and in response to absence of the local measurement object identity associated with the another measurement as the key value, deleting the measurement object corresponding to the key value.

In some examples of the present application, in a case where the measurement parameter includes a cell measurement object identity of a measurement object to be added in the cell, step S 103 includes: comparing the measurement object in the measurement parameter with a measurement object on which measurement is being performed locally in the local measurement configuration list of the terminal to check whether a measurement frequency point conflict or a measurement object identity conflict exists; in response to existence of the measurement frequency point conflict, replacing the cell measurement object identity with a local measurement object identity at a same frequency point, adding a correspondence between the cell measurement object identity and the local measurement object identity to the identity mapping list, and locally merging all configurations of two measurement objects; and in response to existence of the measurement object identity conflict, allocating a local measurement object identity which is unused to the cell measurement object identity, adding a correspondence between the cell measurement object identity and the local measurement object identity to the identity mapping list, and adding the measurement object to the local measurement configuration list of the terminal.

In some examples of the present application, in a case where the measurement parameter includes a cell reporting configuration identity of a reporting configuration to be deleted in the cell, step S 103 includes: checking whether a local reporting configuration identity reallocated to the cell reporting configuration identity exists in the identity mapping list; in response to existence of the local reporting configuration identity reallocated to the cell reporting configuration identity, taking the local reporting configuration identity as a key value, and in response to absence of the local reporting configuration identity reallocated to the cell reporting configuration identity, taking the cell reporting configuration identity as the key value; and deleting a reporting configuration corresponding to the key value from the local measurement configuration list of the terminal.

In some examples of the present application, in a case where the measurement parameter includes a cell reporting configuration identity of a reporting configuration to be added in the cell, step S 103 includes: comparing the reporting configuration in the measurement parameter with a reporting configuration corresponding to measurement which is being performed locally in the local measurement configuration list of the terminal to check whether a reporting configuration identity conflict exists; and in response to existence of the reporting configuration identity conflict, allocating a local reporting configuration identity which is unused to the cell reporting configuration identity, adding a correspondence between the cell reporting configuration identity and the local reporting configuration identity to the identity mapping list, and adding the reporting configuration to the local measurement configuration list of the terminal.

In some examples of the present application, in a case where the measurement parameter includes a cell measurement identity of measurement to be deleted in the cell, step S 103 includes: checking whether a local measurement identity reallocated to the cell measurement identity exists in the identity mapping list; in response to existence of the local measurement identity reallocated to the cell measurement identity, taking the local measurement identity as an index; in response to absence of the local measurement identity reallocated to the cell measurement identity, taking the cell measurement identity as the index; and deleting a combination of a measurement object identity and a reporting configuration identity, which are associated with the index, from the local measurement configuration list of the terminal.

In some examples of the present application, in a case where the measurement parameter includes a cell measurement identity of measurement to be added in the cell, step S 103 includes: comparing the measurement in the measurement parameter with measurement which is being performed locally in the local measurement configuration list of the terminal to check whether a measurement identity conflict exists, or comparing whether a combination of a measurement object identity and a reporting configuration identity, which are associated with a measurement identity, in the measurement parameter is identical to a combination of a measurement object identity and a reporting configuration identity, which are associated with a measurement identity of the measurement which is being performed locally; in response to existence of the measurement identity conflict or identical combinations, reallocating a local measurement identity which is unused to the cell measurement identity, and adding a correspondence between the cell measurement identity and the local measurement identity to the identity mapping list; and in response to existence of at least one of a reallocated local measurement object identity or a reallocated local reporting configuration identity associated with the cell measurement identity, replacing with the at least one of the reallocated cell measurement object identity or the reallocated cell reporting configuration identity, and adding the measurement to the local measurement configuration list of the terminal.

In some examples of the present application, step S105 includes: performing local measurement and generating a measurement report; searching the identity mapping list for a cell measurement identity corresponding to a local measurement identity; and adding the cell measurement identity to the measurement report, and sending the measurement report to a cell corresponding to the cell measurement identity.

In some examples of the present application, the multi-base station connection management method shown in FIG. 1 further includes: in response to existence of a conflict between any of a measurement identity, a reporting configuration identity or a measurement object identity in the measurement parameter and an identity list, determining whether an available local identity resource exists; in response to existence of the available local identity resource, allocating a local identity to a conflicting identity; and in response to absence of the available local identity resource, sending measurement reconfiguration invalid signaling to the cell.

As shown in FIG. 2, a multi-base station connection management device 2 according to the present application includes an extraction module 21, a calling module 22, a processing module 23, a feedback module and a reporting module 25.

The extraction module 21 is configured to: after receiving measurement reconfiguration signaling from a cell, extract a measurement parameter carried in the measurement reconfiguration signaling.

The calling module 22 is configured to call a local measurement configuration list of the terminal and an identity mapping list corresponding to the cell. The local measurement configuration list is used for recording a local measurement configuration parameter and a local identity corresponding to the local measurement configuration parameter, and the identity mapping list is used for recording a correspondence between a cell identity in the measurement reconfiguration signaling from the cell and a local identity reallocated by the terminal.

The processing module 23 is configured to process the measurement parameter carried in the measurement reconfiguration signaling according to the local measurement configuration list of the terminal and the identity mapping list.

The feedback module 24 is configured to send connection reconfiguration complete signaling to the cell.

The reporting module 25 is configured to: in response to determining that a measurement reporting condition is satisfied, send measurement report signaling to the cell by using a measurement identity of the cell.

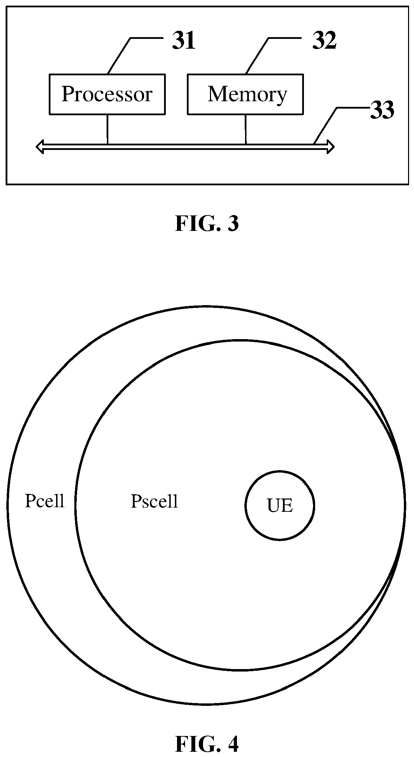

As shown in FIG. 3, the present application provides a user equipment, including a processor 31, a memory 32 and a communication bus 33. The communication bus 33 is configured to implement connection communications between the processor 31 and the memory 32. The processor 31 is configured to perform at least one program stored in the memory 32 to implement the method according to the present application.

The present application is construed and described below in conjunction with examples.

A network convergence scenario where 4G Long Term Evolution (LTE) and 5G New Radio Access Technology (NR) are converged is used as an example for description.

In a pure 4G or 5G networking scenario, a 4G LTE base station (i.e., an eNodeB) or a 5G NR base station (i.e., a gNodeB) performs reporting configurations for a user equipment (UE) in a radio resource control (RRC) connected state through RRC connection reconfiguration signaling, and the UE performs air interface measurement according to these reporting configurations and reports measurement results to the base station. A3GPP 36.331 protocol defines that measObjectId, reportConfigId and measId are each non-multiplexable resources, that is, the measObjectId, reportConfigId and measId cannot be repeated in measurement delivered to the UE. In addition, the protocol also stipulates that contents corresponding to different measObjectIds or measIds cannot be repeated. If the measObjectId, reportConfigId and measId are repeated in the measurement delivered by the base station to the UE, or the contents corresponding to different measObjectIds or measIds are repeated, an abnormal behavior such as re-establishment will the UE may be caused. Moreover, an R12 protocol defines that a value range of each of three ids is 1 to 64.

In a scenario where a multi-connection technology with option3\3A\3X, option4 and option7\7A\7X architecture described in 3GPP 37.340 is used as a 4G and 5G network convergence solution, since there is no negotiation path between an MN and an SN, their independent measurement mechanisms might cause conflicts in the measObjectId, reportConfigId and measId of different measurement on a UE side and repeated contents corresponding to different measurement identifiers, which will cause the abnormal behavior such as re-establishment of the UE.

In an example, a mapping list and an identity list are locally configured, and a case where measurement-related Id resources of different RRC connection entities conflict on the UE side in the multi-connection technology at a 4G and 5G network convergence stage is avoided based on the identity list and the mapping list. This solution has no impact on a base station side and does not require interactions of X2 interface messages between different stations to be increased. For the UE side, merely one set of measurement lists is practically measured, avoiding repeated measurement between different systems. The solution is implemented by a simple and efficient method.

In an example, a local measurement configuration list of a terminal includes a measObjectList, a reportConfigList and a MeasIdList.

Networking involved in the present application is shown in FIG. 4. The UE accesses both a Pcell provided by the MN and a Pscell provided by the SN.

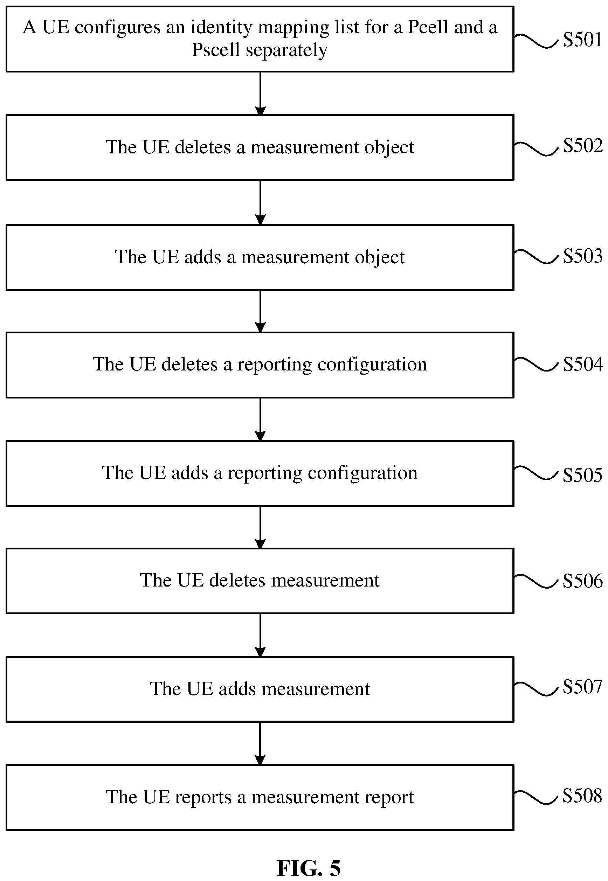

As shown in FIG. 5, a method according to the present application includes steps S501 to S508.

In step S501, the UE configures an identity mapping list for the Pcell and the Pscell separately.

The UE is first connected to the Pcell provided by the MN and then accesses the Pscell provided by the SN. After accessing the Pscell, the UE maintains the identity mapping list for the Pcell and the Pscell locally (inside the UE) separately for recording a mapping relationship between an Id resource delivered through a corresponding cell by each of two different RRC connection entities, the MN and the SN, and an Id resource reallocated by the UE. The identity mapping list includes a measurement object identity (measObjectId) mapping list, a reporting configuration identity (reportConfigId) mapping list and a measurement identity (measId) mapping list configured for the Pcell, and a measurement object identity (measObjectId) mapping list, a reporting configuration identity (reportConfigId) mapping list and a measurement identity (measId) mapping list configured for the Pscell.

In step S502, the UE deletes a measurement object.

The UE receives measurement reconfiguration signaling from any RRC connection entity (the MN or the SN). If a measObjectToRemoveList cell exists in the reconfiguration signaling, the UE searches a measObjectId mapping list of the RRC connection entity for a reallocated measObjectId corresponding to the measObjectToRemoveList cell.

If the reallocated measObjectId corresponding to the measObjectToRemoveList cell exists, the reallocated measObjectId (that is, a local measObjectId, which is the same hereinafter and will not be described again) is used a key value. If the reallocated measObjectId corresponding to the measObjectToRemoveList cell does not exist, an original measObjectId (that is, a cell measObjectId, which is the same hereinafter and will not be described again) in the signaling is used as the key value. It is checked whether a measObjectId associated with another measurement exists as the key value in a local measIdList.

If the measObjectId associated with the another measurement exists as the key value in the local measIdList, the measurement object is not deleted this time. If the measObjectId associated with the another measurement does not exist as the key value in the local measIdList, a local measurement object list (measObjectList) is searched for a measurement object whose measObj ectId is identical to the key value, and the measurement object is deleted.

In step S503, the UE adds a measurement object.

If a measObjectToAddModList exists in the measurement reconfiguration signaling, a measObjectToAddModList cell is compared with a measurement object in the local measObj ectList to check whether a measurement frequency point conflict or a measObjectId conflict exists.

If the measurement frequency point conflict exists, a measObjectId of the measurement object is replaced with a measObjectId of a measurement object which is at a same frequency point and already exists in the measObjectList, and all configurations of the measurement objects are merged.

If the measObjectId conflict exists, a local measObjectId which is unused is allocated to the measurement object. A correspondence between an original measObjectId and the reallocated measObjectId is recorded in the measObjectId mapping list of the corresponding RRC connection entity.

The UE adds the measurement object to the local measObjectList.

In step S504, the UE deletes a reporting configuration.

If a reportConfigToRemoveList exists in the measurement reconfiguration signaling, the reportConfigId mapping list of the corresponding RRC connection entity is searched for a reallocated reportConfigId corresponding to the reportConfigToRemoveList.

If the reallocated reportConfigId corresponding to the reportConfigToRemoveList exists in the reportConfigId mapping list of the corresponding RRC connection entity, the reallocated reportConfigId is used as a key value. If the reallocated reportConfigId corresponding to the reportConfigToRemoveList does not exists in the reportConfigId mapping list of the corresponding RRC connection entity, an original reportConfigId in the signaling is used as the key value. It is checked whether a reportConfigId associated with another measurement exists as the key value in the local measIdList.

If the reportConfigId associated with the another measurement exists as the key value in the local measIdList, the reporting configuration is not deleted this time. If the reportConfigId associated with the another measurement does not exist as the key value in the local measIdList, a local reportConfigList is searched for a reporting configuration whose reportConfigId is identical to the key value, and the reporting configuration is deleted.

In step S505, the UE adds a reporting configuration.

If a reportConfigToAddModList exists in the measurement reconfiguration signaling, the UE compares a reportConfigToAddModList cell with a reporting configuration in the local reportConfigList to check whether a reportConfigId conflict exists.

If the reportConfigId conflict exists, a local reportConfigId which is unused is allocated to the reporting configuration. A correspondence between the original reportConfigId and the reallocated reportConfigId is recorded in the reportConfigId mapping list of the corresponding RRC connection entity.

The reporting configuration is added to the local reportConfigList.

In step S506, the UE deletes measurement.

If a measIdToRemoveList exists in the measurement reconfiguration signaling, the measId mapping list of the corresponding RRC connection entity is searched for a reallocated measId corresponding to the measIdToRemoveList.

If the reallocated measId corresponding to the measIdToRemoveList exists in the measId mapping list of the corresponding RRC connection entity, a record corresponding to the reallocated measId is deleted from the local measIdList.

If the reallocated measId corresponding to the measIdToRemoveList does not exist in the measId mapping list of the corresponding RRC connection entity, a record corresponding to an original measId is deleted from the local measIdList and a reporting configuration with a reportConfigId associated with the original measId as a key value is deleted from the reportConfigList.

In step S507, the UE adds measurement.

If a measIdToAddModList exists in the measurement reconfiguration signaling, the UE compares a measIdToAddModList cell with a measId in the local measIdList to determine whether a conflict exists, or the UE compares a combination of a measObjectId and a reportConfigId, which are associated with a measId to be added this time in the measIdToAddModList cell, with a combination associated with an existing measId in the local measIdList to determine whether they are completely identical.

If the measIdToAddModList cell conflicts with the measId in the local measIdList, or the combination of the measObjectId and the reportConfigId, which are associated with the measId to be added this time in the measIdToAddModList cell, is completely identical to the combination associated with the existing measId in the local measIdList, a local measId which is unused is allocated to the measurement. A correspondence between an original measId and the reallocated measId is recorded in the measId mapping list of the corresponding RRC connection entity.

If a reallocated measObjectId and a reallocated reportConfigId associated with the measId exist, the UE replaces with the reallocated measObjectId and the reallocated reportConfigId. The UE adds measId information to the local measIdList.

In step S508, the UE reports a measurement report.

When an air interface satisfies a measurement condition, the UE sends the measurement report to the corresponding RRC connection entity. It is checked whether a measId corresponding to the measurement in the measIdList is the reallocated measId in the measId mapping list of the corresponding RRC connection entity.

If the measId is reallocated by the UE before the measurement, an original measId corresponding to the reallocated measId in the mapping list is filled into a measId cell in measurementReport signaling, and the measurementReport signaling is sent to the corresponding RRC connection entity.

Examples will be described below in conjunction with 5 scenarios.

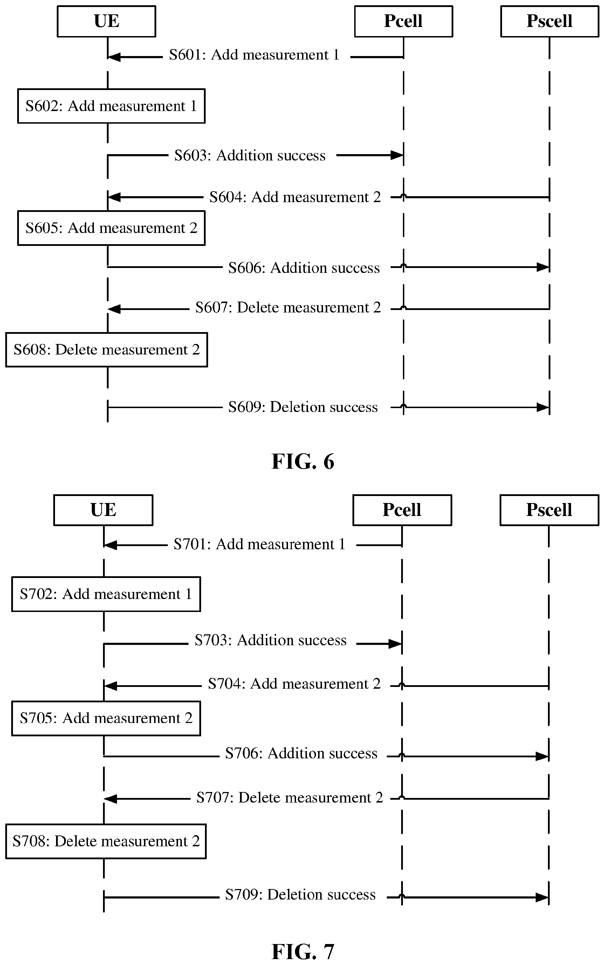

In scenario 1, measurement object Ids in measurement reconfiguration signaling delivered by different RRC connection entities conflict. As shown in FIG. 6, the method includes steps S601 to S609.

In step S601, a Pcell delivers signaling for adding measurement 1 to a UE.

After the UE accesses the Pcell, the Pcell delivers measurement with measId1 to the UE through measurement reconfiguration signaling (delivery manners are various which are the same hereinafter and will not be described again), where the measurement with measId1 is associated with a measurement object with measObjectId1 and a reporting configuration with reportConfigId1. The measurement object with measObjectId of 1 has a frequency point f1.

In step S602, the UE adds measurement 1.

After receiving the measurement reconfiguration signaling, the UE stores the measurement object and its identity, the reporting configuration and its identity, and the measurement identity, etc. to a measObjectList, a reportConfigList and a MeasIdList, respectively.

At this time, the measObjectList includes measObjectId1: frequency point 1; the reportConfigList includes reportConfigId1; and the MeasIdList includes MeasId1 associated with a measurement identity combination of measObjectId1 and reportConfigId1.

In step S603, the UE sends reconfiguration complete signaling to the Pcell.

The UE sends RRC connection reconfiguration complete signaling to the Pcell to notify that measurement addition is completed.

In step S604, a Pscell delivers signaling for adding measurement 2 to the UE.

After an SN addition success, the Pscell delivers measurement with MeasId2 to the UE, where the measurement with MeasId2 is associated with a measurement object with measObjectId1 and a reporting configuration with reportConfigId2. The measurement object with measObjectId1 has a frequency point f2.

In step S605, the UE adds measurement 2.

After receiving measurement reconfiguration signaling from the Pscell, the UE compares the measurement object in a measObjectToAddModList cell with a measurement object in a local measObjectList and finds that a measObjectId of a local measurement frequency point f1 and a measObjectId of a measurement frequency point f2 in the cell are both 1, which cannot uniquely identify one measurement object. The UE sequentially finds a first local Id 2 which is unused within a protocol value range of the measObj ectId. A correspondence between the original measObjectId1 and the reallocated measObjectId2 is recorded in a measObjectId mapping list of an RRC connection entity of the Pscell. A measObjectId of the measurement object is changed from 1 to 2 and measObjectId2 is added to the measObjectList. The correspondence between the original measObjectId1 and the reallocated measObjectId2 is recorded in the measObjectId mapping list of the RRC connection entity of the Pscell.

The UE compares the reporting configuration in a reportConfigToAddModList cell with a reportConfigId in a local reportConfigList, finds no conflict, and adds the reporting configuration with reportConfigId2 to the reportConfigList.

The UE replaces an associated measObjectId 1 in a measIdToAddMod cell in a measIdToAddModList with the reallocated 2, maintains the reportConfigId and the measId unchanged, and stores in the measIdList.

At this time, the measObjectList includes measObjectId1: frequency point 1 and measObjectId2: frequency point 2. The reportConfigList includes reportConfigId1 and reportConfigId2. The MeasIdList includes MeasId1 associated with the measurement identity combination of measObjectId1 and reportConfigId1, and MeasId2 associated with a measurement identity combination of measObj ectId2 and reportConfigId2. The measObjectId mapping list of the Pscell includes a correspondence between a Pscell identity 1 and a local identity 2.

In step S606, the UE sends reconfiguration complete signaling to the Pscell.

The UE sends RRC connection reconfiguration complete signaling to the Pscell to notify that measurement addition is completed.

In step S607, the Pscell delivers signaling for deleting measurement 2 to the UE.

The Pscell delivers RRC connection reconfiguration signaling to the UE to delete the measurement with measId2.

In step S608, the UE deletes measurement 2.

After receiving measurement reconfiguration signaling from the Pscell, the UE finds that the original measObjectId 1 in measObjectToRemoveList signaling corresponds to measObjectId2 reallocated by the UE in the measObjectId mapping list of the RRC connection entity of the Pscell. It is checked that no measObjectId associated with another measurement is 2 in a local measIdList. The measurement object with measObjectId2 is deleted from the local measObjectList. The correspondence between the original measObjectId1 and the reallocated measObjectId2 is deleted from the measObjectId mapping list of the RRC connection entity of the Pscell.

The UE fails to find a same original reportConfigId in a reportConfigId mapping list of the RRC connection entity of the Pscell matching with the original reportConfigId2 in reportConfigToRemoveList signaling. It is checked that no reportConfigId associated with another measurement is 2 in the local measIdList.

The reporting configuration with reportConfigId2 is deleted from the local reportConfigList.

The UE fails to find a same original measId in a measId mapping list of the RRC connection entity of the Pscell matching with the original measId2 in measIdToRemoveList signaling. A measurement item with measId2 is deleted from the local measIdList.

At this time, the measObjectList includes measObjectId1: frequency point 1; the reportConfigList includes reportConfigId1; the MeasIdList includes MeasId1 associated with the measurement identity combination of measObjectId1 and reportConfigId 1; and the measObjectId mapping list of the Pscell is void.

In step S609, the UE sends reconfiguration complete signaling to the Pscell.

The UE sends RRC connection reconfiguration complete signaling to the Pscell to notify that measurement deletion is completed.

In scenario 2, measurement frequency points of measurement objects in measurement reconfiguration signaling delivered by different RRC connection entities conflict. As shown in FIG. 7, the method includes steps S701 to S709.

In step S701, a Pcell delivers signaling for adding measurement 1 to a UE.

After the UE access the Pcell, the Pcell delivers measurement with MeasId1 to the UE, where the measurement with MeasId1 is associated with a measurement object with measObjectId1 and a reporting configuration with reportConfigId1. The measurement object with measObjectId1 has a frequency point f1.

In step S702, the UE adds measurement 1.

After receiving measurement reconfiguration signaling, the UE stores the measurement object, the reporting configuration and measurement Id information to a measObjectList, a reportConfigList and a measIdList, respectively.

At this time, the measObjectList includes measObjectId1: frequency point 1; the reportConfigList includes reportConfigId 1; the MeasIdList includes MeasId1 associated with a measurement identity combination of measObjectId1 and reportConfigId1.

In step S703, the UE sends reconfiguration complete signaling to the Pcell.

The UE sends RRC connection reconfiguration complete signaling to the Pcell to notify that measurement addition is completed.

In step S704, a Pscell delivers signaling for adding measurement 2 to the UE.

After an SN addition success, the Pscell delivers measurement with measId2 to the UE, where the measurement with measId2 is associated with a measurement object with measObjectId2 and a reporting configuration with reportConfigId2. The measurement object with measObj ectId2 also has the frequency point f1.

In step S705, the UE adds measurement 2.

After receiving measurement reconfiguration signaling from the Pscell, the UE compares the measurement object in a measObjectToAddModList cell with a measurement object in a local measObjectList and finds that a local measurement object with measObjectId1 and the measurement object with measObjectId2 in the cell both have the measurement frequency point f1, which breaches protocol stipulations.

The UE does not add the measurement object to the measObjectList, and this measurement uses the local measurement object with measObjectId1.

A correspondence between an original measObjectId2 and the reallocated measObjectId1 is recorded in a measObjectId mapping list of an RRC connection entity of the Pscell.

The UE adds the reporting configuration with reportConfigId2 in a reportConfigToAddModList cell to the reportConfigList.

The UE replaces a measObjectId 2 in a measIdToAddMod cell in a measIdToAddModList with 1 and maintains the reportConfigId and the measId unchanged, which are stored in the measIdList.

At this time, the measObjectList includes measObjectId1: frequency point 1; the reportConfigList includes reportConfigId1 and reportConfigId2; the MeasIdList includes MeasId1 associated with the measurement identity combination of measObjectId1 and reportConfigId1, and MeasId2 associated with a measurement identity combination of measObjectId1 and reportConfigId2; and the measObjectId mapping list of the Pscell includes a correspondence between a Pscell identity 1 and a local identity 2.

In step S706, the UE sends reconfiguration complete signaling to the Pscell.

The UE sends RRC connection reconfiguration complete signaling to the Pscell to notify that measurement addition is completed.

In step S707, the Pscell delivers signaling for deleting measurement 2 to the UE.

The Pscell delivers RRC connection reconfiguration signaling to the UE to delete the measurement with measId2.

In step S708, the UE deletes measurement 2.

After receiving measurement reconfiguration signaling from the Pscell, the UE finds that the original measObjectId2 in measObjectToRemoveList signaling corresponds to measObjectId1 reallocated by the UE in the measObjectId mapping list of the RRC connection entity of the Pscell. It is checked that the measurement with MeasId1 is associated with measObjectId1 in a local measIdList. No deletion operation is performed on the local measObjectList. The correspondence between the original measObjectId2 and the reallocated measObjectId1 is deleted from the measObjectId mapping list of the RRC connection entity of the Pscell.

The UE fails to find a same original reportConfigId in a reportConfigId mapping list of the RRC connection entity of the Pscell matching with the original reportConfigId2 in reportConfigToRemoveList signaling. It is checked that no reportConfigId associated with another measurement is 2 in the local measIdList. The reporting configuration with reportConfigId2 is deleted from a local reportConfigList.

The UE fails to find a same original measId in a measId mapping list of the RRC connection entity of the Pscell matching with the original measId2 in measIdToRemoveList signaling. A measurement item with measId2 is deleted from the local measIdList.

At this time, the measObjectList includes measObjectId1: frequency point 1. The reportConfigList includes reportConfigId1. The MeasIdList includes MeasId1 associated with the measurement identity combination of measObjectId1 and reportConfigId1. The measObjectId mapping list of the Pscell is void.

In step S709, the UE sends reconfiguration complete signaling to the Pscell.

The UE sends RRC connection reconfiguration complete signaling to the Pscell to notify that measurement deletion is completed.

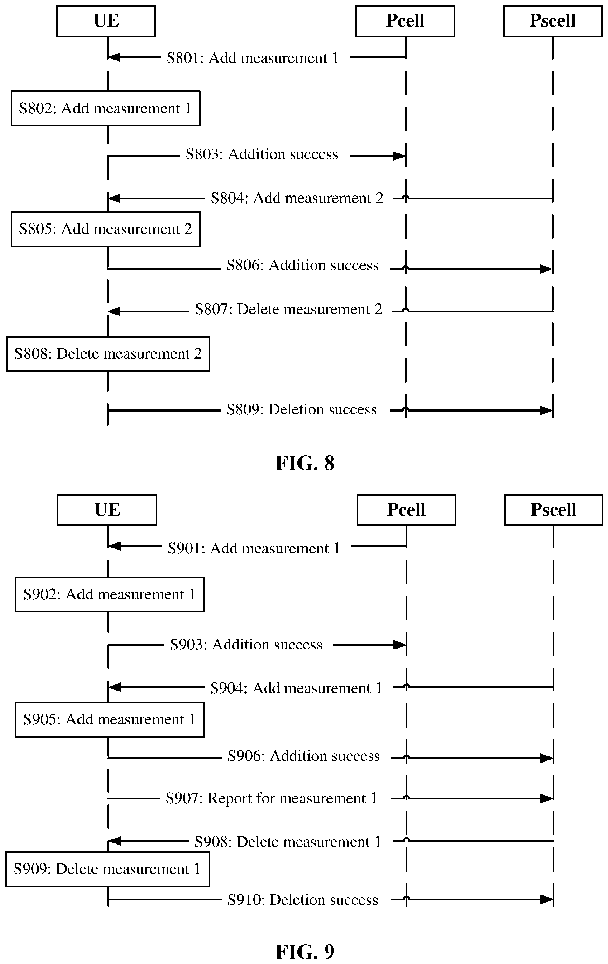

In scenario 3, reporting configuration Ids in measurement reconfiguration signaling delivered by different RRC connection entities conflict. As shown in FIG. 8, the method includes steps S801 to S809.

In step S801, a Pcell delivers signaling for adding measurement 1 to a UE.

After the UE access the Pcell, the Pcell delivers measurement with MeasId1 to the UE, where the measurement with MeasId1 is associated with a measurement object with measObjectId1 and a reporting configuration with reportConfigId1. The measurement object with measObjectId1 has a frequency point f1.

In step S802, the UE adds measurement 1.

After receiving measurement reconfiguration signaling, the UE stores the measurement object, the reporting configuration and measurement Id information to a measObjectList, a reportConfigList and a MeasIdList, respectively.

At this time, the measObjectList includes measObjectId1: frequency point 1; the reportConfigList includes reportConfigId1; and the MeasIdList includes MeasId1 associated with a measurement identity combination of measObjectId1 and reportConfigId1.

In step S803, the UE sends reconfiguration complete signaling to the Pcell.

The UE sends RRC connection reconfiguration complete signaling to the Pcell to notify that measurement addition is completed.

In step S804, a Pscell delivers signaling for adding measurement 2 to the UE.

After an SN addition success, the Pscell delivers measurement with measId2 to the UE, where the measurement with measId2 is associated with a measurement object with measObjectId2 and a reporting configuration with reportConfigId1. The measurement object with measObjectId2 has a frequency point f2.

In step S805, the UE adds measurement 2.

After receiving measurement reconfiguration signaling from the Pscell, the UE compares the measurement object in a measObjectToAddModList cell with a measurement object in a local measObjectList and finds no conflict. The UE adds the measurement object to the measObjectList.

The UE compares the reporting configuration in a reportConfigToAddModList cell with a reportConfigId in a local reportConfigList and finds that the reporting configuration with reportConfigId1 already exists locally. AreportConfigId of value 1 cannot uniquely identify one reporting configuration.

The UE sequentially finds a first local Id 2 which is unused within a protocol value range of 1 to 64 of the reportConfigId. The UE changes a reportConfigId of the reporting configuration in the reportConfigToAddModList cell from 1 to 2, and adds the reporting configuration to the reportConfigList. A correspondence between the original reportConfigId1 and the reallocated reportConfigId2 is recorded in a reportConfigId mapping list of the RRC connection entity of the Pscell. A reportConfigId 2 in a measIdToAddMod cell in a measIdToAddModList is replaced with 1, and the measObjectId and the measId are maintained unchanged, which are stored in the measIdList.

At this time, the measObjectList includes measObjectId1: frequency point 1 and measObjectId2: frequency point 2; the reportConfigList includes reportConfigId1 and reportConfigId2; the MeasIdList includes MeasId1 associated with the measurement identity combination of measObjectId1 and reportConfigId 1, and MeasId2 associated with a measurement identity combination of measObjectId2 and reportConfigId2; and the reportConfigId mapping list of the Pscell includes a correspondence between a Pscell identity 1 and a local identity 2.

In step S806, the UE sends reconfiguration complete signaling to the Pscell.

The UE sends RRC connection reconfiguration complete signaling to the Pscell to notify that measurement addition is completed.

In step S807, the Pscell delivers signaling for deleting measurement 2 to the UE.

The Pscell delivers RRC connection reconfiguration signaling to the UE to delete the measurement with measId2.

In step S808, the UE deletes measurement 2.

After receiving measurement reconfiguration signaling from the Pscell, the UE fails to find a same original measObjectId in the measObjectId mapping list of the RRC connection entity of the Pscell matching with the original measObjectId2 in measObjectToRemoveList signaling. It is checked that no measObjectId associated with another measurement is 2 in a local measIdList. The measurement object with measObjectId2 is deleted from the local measObjectList.

The UE finds that the original reportConfigId1 in reportConfigToRemoveList signaling corresponds to reportConfigId2 reallocated by the UE in the reportConfigId mapping list of the RRC connection entity of the Pscell. It is checked that no reportConfigId associated with another measurement is 2 in the local measIdList. The reporting configuration with reportConfigId2 is deleted from the local reportConfigList. The correspondence between the original reportConfigId1 and the reallocated reportConfigId2 is deleted from the reportConfigId mapping list of the RRC connection entity of the Pscell.

The UE fails to find a same original measId in a measId mapping list of the RRC connection entity of the Pscell matching with the original measId2 in measIdToRemoveList signaling. A measurement item with measId2 is deleted from the local measIdList.

At this time, the measObjectList includes measObjectId1: frequency point 1; the reportConfigList includes reportConfigId 1; the MeasIdList includes MeasId1 associated with the measurement identity combination of measObjectId1 and reportConfigId 1; and the reportConfigId mapping list of the Pscell is void.

In step S809, the UE sends reconfiguration complete signaling to the Pscell.

The UE sends RRC connection reconfiguration complete signaling to the Pscell to notify that measurement deletion is completed.

In scenario 4, measurement Ids in measurement reconfiguration signaling delivered by different RRC connection entities conflict. As shown in FIG. 9, the method includes steps S901 to S910.

In step S901, a Pcell delivers signaling for adding measurement 1 to a UE.

After the UE access the Pcell, the Pcell delivers measurement with measId1 to the UE, where the measurement with measId1 is associated with a measurement object with measObjectId1 and a reporting configuration with reportConfigId1. The measurement object with measObjectId1 has a frequency point f1.

In step S902, the UE adds measurement 1.

After receiving measurement reconfiguration signaling, the UE stores the measurement object, the reporting configuration and measurement Id information to a measObjectList, a reportConfigList and a MeasIdList, respectively.

At this time, the measObjectList includes measObjectId1: frequency point 1; the reportConfigList includes reportConfigId1; and the MeasIdList includes MeasId1 associated with a measurement identity combination of measObjectId1 and reportConfigId1.

In step S903, the UE sends reconfiguration complete signaling to the Pcell.

The UE sends RRC connection reconfiguration complete signaling to the Pcell to notify that measurement addition is completed.

In step S904, a Pscell delivers signaling for adding measurement 1 to the UE.

After an SN addition success, the Pscell delivers measurement with measId1 to the UE, where the measurement with measId1 is associated with a measurement object with measObjectId2 and a reporting configuration with reportConfigId2. The measurement object with measObjectId2 has a frequency point f2.

In step S905, the UE adds measurement 1.

After receiving measurement reconfiguration signaling from the Pscell, the UE compares the measurement object in a measObjectToAddModList cell with a measurement object in a local measObjectList and finds no conflict. The UE adds the measurement object to the measObjectList.

The UE compares the reporting configuration in a reportConfigToAddModList cell with a reportConfigId in a local reportConfigList, finds no conflict, and adds the reporting configuration to the reportConfigList.

The UE compares a measIdToAddMod cell in a measIdToAddModList with a local measIdList, and finds that a measurement identity combination with measId1 already exists locally. A measId of value 1 cannot uniquely identify one measurement identity combination.

The UE sequentially finds a first local Id 2 which is unused within a protocol value range of 1 to 64 of the measId. A measId in the measIdToAddMod cell in the measIdToAddModList is changed from 1 to 2, and the measObjectId and the reportConfigId are maintained unchanged, which are stored in the measIdList. A correspondence between the original measId1 and the reallocated measId2 is recorded in a measId mapping list of an RRC connection entity of the Pscell.

At this time, the measObjectList includes measObjectId1: frequency point 1 and measObjectId2: frequency point 2; the reportConfigList includes reportConfigId1 and reportConfigId2; the MeasIdList includes MeasId1 associated with the measurement identity combination of measObjectId1 and reportConfigId1, and MeasId2 associated with a measurement identity combination of measObj ectId2 and reportConfigId2; and the MeasId mapping list of the Pscell includes a correspondence between a Pscell identity 1 and a local identity 2.

In step S906, the UE sends reconfiguration complete signaling to the Pscell.

The UE sends RRC connection reconfiguration complete signaling to the Pscell to notify that measurement addition is completed.

In step S907, the UE sends measurement report signaling to the Pscell.

MeasId2 in the MeasIdList satisfies a measurement reporting condition. After the UE acquires a measurement result of a measurement item associated with a local measId2 through measurement, the measurement result is filled in the measurement report signaling of an RRC connection, the measId mapping list of the RRC connection entity of the Pscell is searched for the corresponding original measId1, and a measId cell in the measurement report signaling is filled in with 1. The measurement report signaling is sent to the Pscell.

In step S908, the Pscell delivers signaling for deleting measurement 1 to the UE.

The Pscell delivers RRC connection reconfiguration signaling to the UE to delete the measurement with measId1.

In step S909, the UE deletes measurement 1.

After receiving measurement reconfiguration signaling from the Pscell, the UE fails to find a same original measObjectId in the measObjectId mapping list of the RRC connection entity of the Pscell matching with the original measObjectId2 in measObjectToRemoveList signaling. It is checked that no measObjectId associated with another measurement is 2 in the local measIdList. The measurement object with measObjectId2 is deleted from the local measObjectList.

The UE fails to find a same original reportConfigId in a reportConfigId mapping list of the RRC connection entity of the Pscell matching with the original reportConfigId2 in reportConfigToRemoveList signaling. It is checked that no reportConfigId associated with another measurement is 2 in the local measIdList. The reporting configuration with reportConfigId2 is deleted from the local reportConfigList.

The UE finds that the original measId1 in measIdToRemoveList signaling corresponds to measId2 reallocated by the UE in the measId mapping list of the RRC connection entity of the Pscell. A measurement item with measId2 is deleted from the local measIdList. The correspondence between the original measId1 and the reallocated measId2 is deleted from the measId mapping list of the RRC connection entity of the Pscell.

At this time, the measObjectList includes measObjectId1: frequency point 1; the reportConfigList includes reportConfigId 1; the MeasIdList includes MeasId1 associated with the measurement identity combination of measObjectId1 and reportConfigId 1; and the MeasId mapping list of the Pscell is void.

In step S910, the UE sends reconfiguration complete signaling to the Pscell.

The UE sends RRC connection reconfiguration complete signaling to the Pscell to notify that measurement deletion is completed.

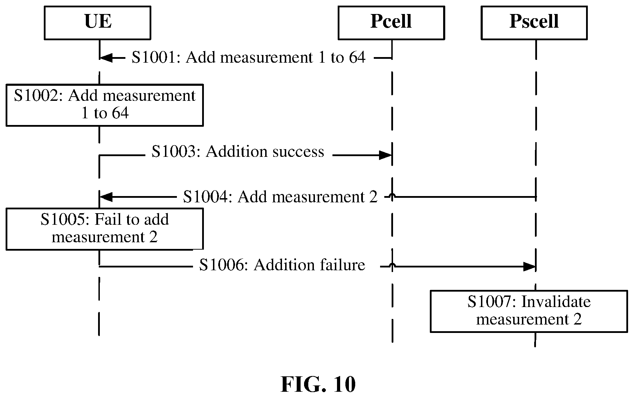

In scenario 5, after Ids of different RRC connection entities conflict, a UE has no allocable Id resources. As shown in FIG. 10, the method includes steps S1001 to S1007.

In step S1001, a Pcell delivers signaling for adding measurement 1 to 64 to the UE.

After the UE access the Pcell, the Pcell delivers 64 measurements with measIds 1 to 64 to the UE, where the measurements with measIds 1 to 64 are associated with measurement objects with measObjectIds 1 to 64 and reporting configurations with reportConfigIds 1 to 64, respectively. The measurement objects with measObjectIds 1to 64 have frequency point f1 to f64.

In step S1002, the UE adds measurements 1 to 64.

After receiving measurement reconfiguration signaling, the UE stores the measurement objects, the reporting configurations and measurement Id information to a measObjectList, a reportConfigList and a measIdList, respectively.

At this time, the measObjectList includes measObjectId1: frequency point 1, ..., measObjectIdi: frequency point i, ..., and measObjectId64: frequency point 64. The reportConfigList includes reportConfigId1, ..., reportConfigIdi, ..., and reportConfigId64; the MeasIdList includes MeasId1 associated with a measurement identity combination of measObjectId1 and reportConfigId 1, ..., MeasIdi associated with a measurement identity combination of measObjectIdi and reportConfigIdi, ..., and MeasId64 associated with a measurement identity combination of measObjectId64 and reportConfigId64.

In step S1003, the UE sends reconfiguration complete signaling to the Pcell.

The UE sends RRC connection reconfiguration complete signaling to the Pcell to notify that measurement addition is completed.

In step S1004, a Pscell delivers signaling for adding measurement 2 to the UE.

After an SN addition success, the Pscell delivers measurement with measId2 to the UE, where the measurement with measId2 is associated with a measurement object with measObjectId1 and a reporting configuration with reportConfigId2. The measurement object with measObjectId1 has a frequency point f65.

In step S1005, the UE fails to add measurement 2.

After receiving measurement reconfiguration signaling from the Pscell, the UE compares the measurement object in a measObjectToAddModList cell with a measurement object in a local measObjectList and finds that a measObjectId of a local measurement frequency point f1 and a measObjectId of a measurement frequency point f65 in the cell are both 1, which cannot uniquely identify one measurement object.

The UE sequentially finds a local Id which is unused within a protocol value range of 1 to 64 of the measObjectId, and finds that there are no available Id resources. The measurement object is not added to the measObjectList.

In step S 1006, the UE sends invalid reconfiguration signaling to the Pscell.

The UE sends invalid RRC measurement reconfiguration signaling to the Pscell.

In step S 1007, the Pscell invalidates measurement 2.

After the Pscell receives invalid RRC connection reconfiguration signaling, measurement 2 does not take effect on a cell side.

The present application further provides a computer readable storage medium, storing at least one program which is executed to implement all methods provided by the present application.

According to the multi-base station connection management method, the user equipment and the computer readable storage medium provided by the present application, after receiving the measurement reconfiguration signaling from the cell, the user equipment calls the local measurement configuration list of the terminal and the identity mapping list corresponding to the cell, and processes the measurement parameter carried in the measurement reconfiguration signaling. In this way, even if a measurement parameter received this time conflicts with a measurement parameter of measurement which is being performed by the user equipment, the conflict can be solved according to the local measurement configuration list of the terminal and the identity mapping list corresponding to the cell, achieving detection on a user equipment side of a conflict between identities of measurement delivered by different cells and reallocation and mapping of conflicting identities, avoiding a conflict between identities of different measurement received by the UE side, the abnormal measurement result or other abnormal behaviors due to the conflict between identities of different measurement, and the conflict between identities of different measurement received by the UE side due to independent measurement mechanisms of the MN and the SN in the related art, and improving user experience.

Each of the modules or the steps above-mentioned may be implemented by a general-purpose computing device. They may be concentrated on a single computing device or distributed over a network composed of multiple computing devices. For example, the modules or the steps may be implemented by program codes executable by the computing device, so that the modules or the steps may be stored in a computer storage medium such as a read only memory/random access memory (ROM/RAM), a magnetic disk and an optical disk and executed by the computing device. In some circumstances, the illustrated or described steps may be performed in sequences different from those described herein, or the modules or the steps may be made into various integrated circuit modules separately, or multiple modules or steps therein may be made into a single integrated circuit module for implementation. Therefore, the present application is not limited to any specific combination of hardware and software.

## Claims

1. A multi-base station connection management method performed by a terminal that is a user equipment
simultaneously connected to a primary cell of a master node and a primary secondary cell of a secondary node, comprising after receiving measurement reconfiguration signaling from any cell of the primary cell or the primary secondary cell, extracting (S101), by the terminal, a measurement parameter carried in the measurement reconfiguration signaling;
calling (S102) a local measurement configuration list of the terminal and an identity mapping list corresponding to the cell; wherein the local measurement configuration list is used for recording a local measurement configuration parameter and a local identity corresponding to the local measurement configuration parameter, and the identity mapping list is used for recording a correspondence between a cell identity in the measurement reconfiguration signaling from the cell and a local identity reallocated by the terminal;
processing (S103) the measurement parameter carried in the measurement reconfiguration signaling according to the local measurement configuration list of the terminal and the identity mapping list;
sending (S104) connection reconfiguration complete signaling to the cell; and
in response to determining that a measurement reporting condition is satisfied,
sending (S105) measurement report signaling to the cell by using a measurement identity of the cell,
wherein in a case where the measurement parameter comprises a cell measurement object identity of a measurement object to be added in the cell, processing (S103) the measurement parameter carried in the measurement reconfiguration signaling according to the local measurement configuration list of the terminal and the identity mapping list comprises:
comparing the measurement object in the measurement parameter with a measurement object on which measurement is being performed locally in the local measurement configuration list of the terminal to check whether a measurement frequency point conflict or a measurement object identity conflict exists;
in response to existence of the measurement frequency point conflict, replacing the cell measurement object identity with a local measurement object identity at a same frequency point, adding a correspondence between the cell measurement object identity and the local measurement object identity to the identity mapping list, and locally merging all configurations of two measurement objects; and
in response to existence of the measurement object identity conflict, allocating a local measurement object identity which is unused to the cell measurement object identity, adding a correspondence between the cell measurement object identity and the local measurement object identity to the identity mapping list, and adding the measurement object to the local measurement configuration list of the terminal.

2. The multi-base station connection management method of claim 1, wherein in a case where the measurement parameter comprises a cell measurement object identity of a measurement object to be deleted in the cell, processing (S103) the measurement parameter carried in the measurement reconfiguration signaling according to the local measurement configuration list of the terminal and the identity mapping list comprises:
checking whether a local measurement object identity reallocated to the cell measurement object identity exists in the identity mapping list;
in response to existence of the local measurement object identity reallocated to the cell measurement object identity, taking the local measurement object identity as a key value; and in response to absence of the local measurement object identity reallocated to the cell measurement object identity, taking the cell measurement object identity as the key value; and
deleting a measurement object corresponding to the key value from the local measurement configuration list of the terminal.

3. The multi-base station connection management method of claim 2, wherein processing (S103) the measurement parameter carried in the measurement reconfiguration signaling according to the local measurement configuration list of the terminal and the identity mapping list further comprises:
checking whether a local measurement object identity associated with another measurement as the key value according to the local measurement configuration list of the terminal;
in response to existence of the local measurement object identity associated with the another measurement exists as the key value, not deleting the measurement object corresponding to the key value; and
in response to absence of the local measurement object identity associated with the another measurement as the key value, deleting the measurement object corresponding to the key value.

4. The multi-base station connection management method of claim 1, wherein in a case where the measurement parameter comprises a cell reporting configuration identity of a reporting configuration to be deleted in the cell, processing the measurement parameter carried in the measurement reconfiguration signaling according to the local measurement configuration list of the terminal and the identity mapping list comprises:
checking whether a local reporting configuration identity reallocated to the cell reporting configuration identity exists in the identity mapping list;
in response to existence of the local reporting configuration identity reallocated to the cell reporting configuration identity, taking the local reporting configuration identity as a key value; and in response to absence of the local reporting configuration identity reallocated to the cell reporting configuration identity, taking the cell reporting configuration identity as the key value; and
deleting a reporting configuration corresponding to the key value from the local measurement configuration list of the terminal.

5. The multi-base station connection management method of claim 1, wherein in a case where the measurement parameter comprises a cell reporting configuration identity of a reporting configuration to be added in the cell, processing (S 103) the measurement parameter carried in the measurement reconfiguration signaling according to the local measurement configuration list of the terminal and the identity mapping list comprises:
comparing the reporting configuration in the measurement parameter with a reporting configuration corresponding to measurement which is being performed locally in the local measurement configuration list of the terminal to check whether a reporting configuration identity conflict exists; and
in response to existence of the reporting configuration identity conflict, allocating a local reporting configuration identity which is unused to the cell reporting configuration identity, adding a correspondence between the cell reporting configuration identity and the local reporting configuration identity to the identity mapping list, and adding the reporting configuration to the local measurement configuration list of the terminal.

6. The multi-base station connection management method of claim 1, wherein in a case where the measurement parameter comprises a cell measurement identity of measurement to be deleted in the cell, processing (S103) the measurement parameter carried in the measurement reconfiguration signaling according to the local measurement configuration list of the terminal and the identity mapping list comprises:
checking whether a local measurement identity reallocated to the cell measurement identity exists in the identity mapping list;
in response to existence of the local measurement identity reallocated to the cell measurement identity, taking the local measurement identity as an index; and in response to absence of the local measurement identity reallocated to the cell measurement identity, taking the cell measurement identity as the index; and
deleting a combination of a measurement object identity and a reporting configuration identity, which are associated with the index, from the local measurement configuration list of the terminal.

7. The multi-base station connection management method of claim 1, wherein in a case where the measurement parameter comprises a cell measurement identity of measurement to be added in the cell, processing (S103) the measurement parameter carried in the measurement reconfiguration signaling according to the local measurement configuration list of the terminal and the identity mapping list comprises:
comparing the measurement in the measurement parameter with measurement which is being performed locally in the local measurement configuration list of the terminal to check whether a measurement identity conflict exists, or comparing whether a combination of a measurement object identity and a reporting configuration identity, which are associated with a measurement identity, in the measurement parameter is identical to a combination of a measurement object identity and a reporting configuration identity, which are associated with a measurement identity of the measurement which is being performed locally;
in response to existence of the measurement identity conflict or identical combinations, allocating a local measurement identity which is unused to the cell measurement identity, and adding a correspondence between the cell measurement identity and the local measurement identity to the identity mapping list; and
in response to existence of at least one of a reallocated local measurement object identity or a reallocated local reporting configuration identity associated with the cell measurement identity, replacing with the at least one of the reallocated cell measurement object identity or the reallocated cell reporting configuration identity, and adding the measurement to the local measurement configuration list of the terminal.

8. The multi-base station connection management method of claim 7, wherein sending (S 105) the measurement report signaling to the cell by using the measurement identity of the cell comprises:
performing local measurement and generating a measurement report;
searching the identity mapping list for a cell measurement identity corresponding to a local measurement identity; and
adding the cell measurement identity to the measurement report, and sending the measurement report to a cell corresponding to the cell measurement identity.

9. The multi-base station connection management method of any one of claims 1 to 8, further comprising:
in response to existence of a conflict between any of a measurement identity, a reporting configuration identity or a measurement object identity in the measurement parameter and an identity mapping list, determining whether an available local identity resource exists;
in response to existence of the available local identity resource, allocating a local identity to a conflicting identity; and
in response to absence of the available local identity resource, sending measurement reconfiguration invalid signaling to the cell.

10. A user equipment, comprising a processor (31), a memory (32) and a communication bus (33); wherein
the communication bus (33) is configured to implement connection communications between the processor (31) and the memory (32); and
the processor (31) is configured to execute at least one program stored in the memory (32) to implement the multi-base station connection management method of any one of claims 1 to 9.

11. A computer readable storage medium, storing at least one program executable by at least one processor in a user equipment to implement the multi-base station connection management method of any one of claims 1 to 9.

12. A processor for a user equipment, which is configured to execute programs, **characterized in that** the programs, when executed, perform the multi-base station connection management method of any one of claims 1 to 9.

## Patentansprüche

1. Verfahren zur Verwaltung einer Verbindung von mehreren Basisstationen, das von einem Endgerät durchgeführt wird, das ein Benutzergerät ist, das gleichzeitig mit einer Primärzelle eines Hauptknotens und einer primären Sekundärzelle eines Sekundärknotens verbunden ist, umfassend:
nach Empfangen einer Messungsrekonfigurations-Signalisierung von einer beliebigen Zelle der Primärzelle oder der primären Sekundärzelle, Extrahieren (S101) eines in der Messungsrekonfigurations-Signalisierung enthaltenen Messparameters durch das Endgerät;
Aufrufen (S102) einer lokalen Messkonfigurationsliste des Endgeräts und einer der Zelle entsprechenden Identitätszuordnungsliste; wobei die lokale Messkonfigurationsliste zum Aufzeichnen eines lokalen Messkonfigurationsparameters und einer lokalen Identität, die dem lokalen Messkonfigurationsparameter entspricht, verwendet wird, und die Identitätszuordnungsliste zum Aufzeichnen einer Zuordnung zwischen einer Zellenidentität in der Messrekonfigurations-Signalisierung der Zelle und einer durch das Endgerät neu zugewiesenen lokalen Identität verwendet wird;
Verarbeitung (S103) des in der Messungsrekonfigurations-Signalisierung übertragenen Messparameters gemäß der lokalen Messungskonfigurationsliste des Endgerätes und der Identitätszuordnungsliste;
Senden (S104) der Signalisierung des Abschlusses der Verbindungsrekonfiguration an die Zelle; und
als Reaktion auf die Feststellung, dass eine Messberichtsbedingung erfüllt ist, Senden (S105) einer Messberichts-Signalisierung an die Zelle unter Verwendung einer Messidentität der Zelle,
wobei in einem Fall, in dem der Messparameter eine Zellen-Messobjekt-Identität eines in der Zelle hinzuzufügenden Messobjekts umfasst, das Verarbeiten (S103) des in der Messrekonfigurations-Signalisierung übertragenen Messparameters gemäß der lokalen Messkonfigurationsliste des Endgeräts und der Identitätszuordnungsliste umfasst:
Vergleichen des Messobjekts in den Messparametern mit einem Messobjekt, an dem lokal in der lokalen Messkonfigurationsliste des Endgeräts eine Messung durchgeführt wird, um zu prüfen, ob ein Messfrequenzpunktkonflikt oder ein Messobjektidentitätskonflikt besteht;
als Reaktion auf das Vorhandensein des Messfrequenzpunktkonflikts, Ersetzen der Zellenmessobjektidentität durch eine lokale Messobjektidentität an einem gleichen Frequenzpunkt, Hinzufügen einer Zuordnung zwischen der Zellenmessobjektidentität und der lokalen Messobjektidentität zu der Identitätszuordnungsliste und lokales Zusammenführen aller Konfigurationen von zwei Messobjekten; und
als Reaktion auf das Vorhandensein des Messobjektidentitätskonflikts, Zuweisen einer lokalen Messobjektidentität, die für die Zellenmessobjektidentität unbenutzt ist, Hinzufügen einer Zuordnung zwischen der Zellenmessobjektidentität und der lokalen Messobjektidentität zu der Identitätszuordnungsliste und Hinzufügen des Messobjekts zu der lokalen Messkonfigurationsliste des Endgeräts.

2. Verfahren zur Verwaltung einer Verbindung von mehreren Basisstationen nach Anspruch 1, wobei in einem Fall, in dem der Messparameter eine Zellenmessobjektidentität eines in der Zelle zu löschenden Messobjekts umfasst, Verarbeiten (S103) des in der Messrekonfigurations-Signalisierung übertragenen Messparameters gemäß der lokalen Messkonfigurationsliste des Endgeräts und der Identitätszuordnungsliste umfasst:
Prüfen, ob eine lokale Messobjektidentität, die der Zellenmessobjektidentität neu zugewiesen wurde, in der Identitätszuordnungsliste existiert;
als Reaktion auf das Vorhandensein der lokalen Messobjektidentität, die der Zellenmessobjektidentität neu zugewiesen wird, die lokale Messobjektidentität als Schlüsselwert nimmt; und als Reaktion auf das Nicht-Vorhandensein der lokalen Messobjektidentität, die der Zellenmessobjektidentität neu zugewiesen wird, die Zellenmessobjektidentität als den Schlüsselwert nimmt; und
Löschen eines dem Schlüsselwert entsprechenden Messobjekts aus der lokalen Messkonfigurationsliste des Endgeräts.

3. Verfahren zur Verwaltung einer Verbindung von mehreren Basisstationen nach Anspruch 2, wobei das Verarbeiten (S103) des in der Messungsrekonfigurations-Signalisierung übertragenen Messparameters gemäß der lokalen Messungskonfigurationsliste des Endgeräts und der Identitätszuordnungsliste ferner umfasst:
Überprüfen, ob eine lokale Messobjektidentität mit einer anderen Messung als Schlüsselwert gemäß der lokalen Messkonfigurationsliste des Terminals verbunden ist;
als Reaktion auf das Vorhandensein der lokalen Messobjektidentität, die mit der anderen Messung verbunden ist, die als Schlüsselwert existiert, das Messobjekt, das dem Schlüsselwert entspricht, nicht zu löschen; und
als Reaktion auf das Nicht-Vorhandensein der lokalen Messobjektidentität, die mit der anderen Messung als Schlüsselwert verbunden ist, das Löschen des Messobjekts, das dem Schlüsselwert entspricht.

4. Verfahren zur Verwaltung einer Verbindung von mehreren Basisstationen nach Anspruch 1, wobei in einem Fall, in dem der Messparameter eine Zellenmeldekonfigurationsidentität einer in der Zelle zu löschenden Meldekonfiguration umfasst, das Verarbeiten des in der Messungsrekonfigurations-Signalisierung übertragenen Messparameters gemäß der lokalen Messungskonfigurationsliste des Endgeräts und der Identitätszuordnungsliste umfasst:
Prüfen, ob eine lokale Meldekonfigurationsidentität, die der Zellenmeldekonfigurationsidentität neu zugewiesen wurde, in der Identitätszuordnungsliste vorhanden ist;
als Reaktion auf das Vorhandensein der lokalen Meldekonfigurationsidentität, die der
Zellenmeldekonfigurationsidentität neu zugewiesen wird, die lokale Meldekonfigurationsidentität als Schlüsselwert nimmt; und als Reaktion auf das Nicht-Vorhandensein der lokalen Meldekonfigurationsidentität, die der
Zellenmeldekonfigurationsidentität neu zugewiesen wird, die Zellenmeldekonfigurationsidentität als Schlüsselwert nimmt; und
Löschen einer dem Schlüsselwert entsprechenden Meldekonfiguration aus der lokalen Messkonfigurationsliste des Endgeräts.

5. Verfahren zur Verwaltung einer Verbindung von mehreren Basisstationen nach Anspruch 1, wobei in einem Fall, in dem der Messparameter eine Zellenmeldekonfigurationsidentität einer in der Zelle hinzuzufügenden Meldekonfiguration umfasst, das Verarbeiten (S103) des in der Messungsrekonfigurations-Signalisierung übertragenen Messparameters gemäß der lokalen Messungskonfigurationsliste des Endgeräts und der Identitätszuordnungsliste umfasst:
Vergleichen der Meldekonfiguration in den Messparametern mit einer Meldekonfiguration, die einer Messung entspricht, die lokal in der lokalen Messkonfigurationsliste des Endgeräts durchgeführt wird, um zu prüfen, ob ein Meldekonfigurationsidentitätskonflikt besteht; und
als Reaktion auf das Vorhandensein des
Meldekonfigurationsidentitätskonflikt, Zuweisen einer lokalen Meldekonfigurationsidentität, die für die
Zellenmeldekonfigurationsidentität unbenutzt ist, Hinzufügen einer Zuordnung zwischen der Zellenmeldekonfigurationsidentität und der lokalen Meldekonfigurationsidentität zu der Identitätszuordnungsliste und Hinzufügen der Meldekonfiguration zu der lokalen Messkonfigurationsliste des Endgeräts.

6. Verfahren zur Verwaltung einer Verbindung von mehreren Basisstationen nach Anspruch 1, wobei in einem Fall, in dem der Messparameter eine Zellenmessungsidentität einer in der Zelle zu löschenden Messung umfasst, das Verarbeiten (S103) des in der Messungsrekonfigurations-Signalisierung übertragenen Messparameters gemäß der lokalen Messungskonfigurationsliste des Endgeräts und der Identitätszuordnungsliste umfasst:
Prüfen, ob eine lokale Messidentität, die der Zellenmessidentität neu zugewiesen wurde, in der Identitätszuordnungsliste existiert;
als Reaktion auf das Vorhandensein der lokalen Messidentität, die der Zellenmessidentität neu zugewiesen wird, die lokale Messidentität als einen Index nimmt; und als Reaktion auf das Nicht-Vorhandensein der lokalen Messidentität, die der Zellenmessidentität neu zugewiesen wird, die Zellenmessidentität als den Index nimmt; und
Löschen einer Kombination aus einer Messobjektidentität und einer Meldekonfigurationsidentität, die mit dem Index verbunden sind, aus der lokalen Messkonfigurationsliste des Endgeräts.

7. Verfahren zur Verwaltung einer Verbindung von mehreren Basisstationen nach Anspruch 1, wobei in einem Fall, in dem der Messparameter eine Zellenmessungsidentität einer in der Zelle hinzuzufügenden Messung umfasst, das Verarbeiten (S103) des Messparameters, der in der Messungsrekonfigurations-Signalisierung getragen wird, gemäß der lokalen Messungskonfigurationsliste des Endgeräts und der Identitätszuordnungsliste umfasst:
Vergleichen der Messung in dem Messparameter mit einer Messung,
die lokal in der lokalen Messkonfigurationsliste des Endgeräts durchgeführt wird, um zu prüfen, ob ein Messidentitätskonflikt besteht,
oder Vergleichen, ob eine Kombination einer Messobjektidentität und
einer Meldekonfigurationsidentität, die mit einer Messidentität verbunden sind, in dem Messparameter identisch ist mit einer Kombination einer Messobjektidentität und einer Meldekonfigurationsidentität, die mit einer Messidentität der Messung verbunden sind, die lokal durchgeführt wird;
als Reaktion auf das Vorhandensein des Messidentitätskonflikts oder
identischer Kombinationen, Zuweisen einer lokalen Messidentität, die für die Zellenmessidentität unbenutzt ist, und Hinzufügen einer Zuordnung zwischen der Zellenmessidentität und der lokalen Messidentität zu der Identitätszuordnungsliste; und
als Reaktion auf das Vorhandensein einer neu zugewiesenen lokalen Messobjektidentität oder einer neu zugewiesenen lokalen Meldekonfigurationsidentität, die mit der Zellenmessungsidentität verbunden ist, Ersetzen durch die neu zugewiesene Zellenmessobjektidentität oder die neu zugewiesene Zellenmeldekonfigurationsidentität und Hinzufügen der Messung zur lokalen Messkonfigurationsliste des Endgeräts.

8. Verfahren zur Verwaltung einer Verbindung von mehreren Basisstationen nach Anspruch 7, wobei das Senden (S105) der Messberichts-Signalisierung an die Zelle unter Verwendung der Messidentität der Zelle umfasst:
Durchführen einer lokalen Messung und Erstellen eines Messberichts;
Durchsuchen der Identitätszuordnungsliste nach einer Zellmessidentität, die einer lokalen Messidentität entspricht; und
Hinzufügen der Zellenmessidentität zu dem Messbericht und Senden des Messberichts an eine Zelle, die der Zellenmessidentität entspricht.

9. Verfahren zur Verwaltung einer Verbindung von mehreren Basisstationen nach einem der Ansprüche 1 bis 8, das ferner Folgendes umfasst:
als Reaktion auf das Vorhandensein eines Konflikts zwischen einer Messidentität, einer Meldekonfigurationsidentität oder einer Messobjektidentität in den Messparametern und einer Identitätszuordnungsliste, Bestimmen, ob eine verfügbare lokale Identitätsressource existiert;
als Reaktion auf das Vorhandensein der verfügbaren lokalen Identitätsressource, Zuweisen einer lokalen Identität zu einer konfligierenden Identität; und
als Reaktion auf das Nicht-Vorhandensein der verfügbaren lokalen Identitätsressource, Senden einer Signalisierung der ungültigen Messrekonfiguration an die Zelle.

10. Ein Benutzergerät, das einen Prozessor (31), einen Speicher (32) und
einen Kommunikationsbus (33) umfasst; wobei
der Kommunikationsbus (33) konfiguriert ist, um Verbindungskommunikationen zwischen dem Prozessor (31) und dem Speicher (32) zu implementieren; und
der Prozessor (31) so konfiguriert ist, dass er mindestens ein im Speicher (32) gespeichertes Programm ausführt, um das Verfahren zur Verwaltung einer Verbindung von mehreren Basisstationen nach einem der Ansprüche 1 bis 9 zu implementieren.

11. Computerlesbares Speichermedium, auf dem mindestens ein Programm gespeichert ist, das von mindestens einem Prozessor in einem Benutzergerät ausgeführt werden kann, um das Verfahren zur Verwaltung einer Verbindung von mehreren Basisstationen nach einem der Ansprüche 1 bis 9 zu implementieren.

12. Prozessor für ein Benutzergerät, der zum Ausführen von Programmen konfiguriert ist, **dadurch gekennzeichnet, dass** die Programme, wenn sie ausgeführt werden, das Verfahren zur Verwaltung einer Verbindung von mehreren Basisstationen nach einem der Ansprüche 1 bis 9 durchführen.

## Revendications

1. Procédé de gestion des connexions entre stations de base multiples exécuté par un terminal qui est un équipement utilisateur connecté simultanément à une cellule primaire d'un noeud maître et à une cellule secondaire primaire d'un noeud secondaire, comprenant :
après avoir reçu un signal de reconfiguration de mesure provenant d'une cellule quelconque de la cellule primaire ou de la cellule secondaire primaire, extraire (S101), par le terminal, un paramètre de mesure porté dans le signal de reconfiguration de mesure ;
appeler (S102) une liste de configuration des mesures locales du terminal et une liste de correspondance des identités correspondant à la cellule ; la liste de configuration des mesures locales est utilisée pour enregistrer un paramètre de configuration des mesures locales et une identité locale correspondant au paramètre de configuration des mesures locales, et la liste de correspondance des identités est utilisée pour enregistrer une correspondance entre une identité de cellule dans le signal de reconfiguration des mesures provenant de la cellule et une identité locale réattribuée par le terminal ;
traiter (S103) le paramètre de mesure porté dans le signal de reconfiguration de la mesure en fonction de la liste de configuration locale de la mesure du terminal et de la liste de correspondance d'identité ;
transmettre (S104) un signal de fin de reconfiguration de la connexion à la cellule ; et
en réponse à la détermination qu'une condition de rapport de mesure est satisfaite, transmettre (S105) un signal de rapport de mesure à la cellule en utilisant une identité de mesure de la cellule,
dans lequel, en cas de paramètre de mesure comprenant une identité d'objet de mesure cellulaire d'un objet de mesure à ajouter dans la cellule, traiter (S103) le paramètre de mesure porté dans le signal de reconfiguration de mesure conformément à la liste de configuration de mesure locale du terminal et à la liste de correspondance d'identité comprend ce qui suit :
comparer l'objet de mesure dans le paramètre de mesure avec un objet de mesure sur lequel une mesure est effectuée localement dans la liste de configuration de mesure locale du terminal pour vérifier s'il existe un conflit de point de fréquence de mesure ou un conflit d'identité d'objet de mesure ;
en réponse à l'existence du conflit de point de fréquence de mesure, remplacer l'identité de l'objet de mesure cellulaire par une identité d'objet de mesure local à un même point de fréquence, ajouter une correspondance entre l'identité de l'objet de mesure cellulaire et l'identité de l'objet de mesure local à la liste de correspondance d'identité, et fusionner localement toutes les configurations de deux objets de mesure ; et
en réponse à l'existence du conflit d'identité d'objet de mesure, attribuer une identité d'objet de mesure local inutilisée à l'identité d'objet de mesure cellulaire, ajouter une correspondance entre l'identité d'objet de mesure cellulaire et l'identité d'objet de mesure local à la liste de correspondance d'identité, et ajouter l'objet de mesure à la liste de configuration de mesure locale du terminal.

2. Procédé de gestion des connexions entre stations de base multiples de la revendication 1, dans lequel en cas où le paramètre de mesure comprend une identité d'objet de mesure de cellule d'un objet de mesure à supprimer dans la cellule, traiter (S103) le paramètre de mesure porté dans le signal de reconfiguration de mesure selon la liste de configuration de mesure locale du terminal et la liste de correspondance d'identité comprend :
vérifier si une identité d'objet de mesure local réattribuée à l'identité d'objet de mesure cellulaire existe dans la liste de correspondance des identités ;
en réponse à l'existence de l'identité de l'objet de mesure local réattribuée à l'identité de l'objet de mesure cellulaire, prendre l'identité de l'objet de mesure local comme valeur clé ; et en réponse à l'absence de l'identité de l'objet de mesure local réattribuée à l'identité de l'objet de mesure cellulaire, prendre l'identité de l'objet de mesure cellulaire comme valeur clé ; et
supprimer un objet de mesure correspondant à la valeur clé de la liste de configuration des mesures locales du terminal.

3. Procédé de gestion des connexions entre stations de base multiples de la revendication 2, dans lequel traiter (S103) le paramètre de mesure porté dans le signal de reconfiguration de mesure en fonction de la liste de configuration de mesure locale du terminal et de la liste de correspondance d'identité comprend en outre :
vérifier si une identité d'objet de mesure locale est associée à une autre mesure en tant que valeur clé conformément à la liste de configuration des mesures locales du terminal ;
en réponse à l'existence de l'identité de l'objet de mesure local associé à l'autre mesure existant en tant que valeur clé, ne pas supprimer l'objet de mesure correspondant à la valeur clé ; et
en réponse à l'absence de l'identité de l'objet de mesure local associé à l'autre mesure en tant que valeur clé, supprimer l'objet de mesure correspondant à la valeur clé.

4. Procédé de gestion des connexions entre stations de base multiples de la revendication 1, dans lequel en cas où le paramètre de mesure comprend une identité de configuration de rapport de cellule d'une configuration de rapport à supprimer dans la cellule, traiter le paramètre de mesure porté dans le signal de reconfiguration de mesure selon la liste de configuration de mesure locale du terminal et la liste de correspondance d'identité comprend :
vérifier si une identité de configuration de rapport locale réattribuée à l'identité de configuration de rapport cellulaire existe dans la liste de correspondance des identités ;
en réponse à l'existence de l'identité de configuration de rapport local réattribuée à l'identité de configuration de rapport cellulaire, prendre l'identité de configuration de rapport local comme valeur clé ; et en réponse à l'absence de l'identité de configuration de rapport local réattribuée à l'identité de configuration de rapport cellulaire, prendre l'identité de configuration de rapport cellulaire comme valeur clé ; et
supprimer de la liste des configurations de mesure locales du terminal une configuration de rapport correspondant à la valeur clé.

5. Procédé de gestion des connexions entre stations de base multiples de la revendication 1, dans lequel, en cas où le paramètre de mesure comprend une identité de configuration de rapport de cellule d'une configuration de rapport à ajouter dans la cellule, traiter (S103) le paramètre de mesure porté dans le signal de reconfiguration de mesure en fonction de la liste de configuration de mesure locale du terminal et de la liste de correspondance d'identité comprend :
comparer la configuration de rapport dans le paramètre de mesure avec une configuration de rapport correspondant à la mesure effectuée localement dans la liste de configuration de mesure locale du terminal pour vérifier s'il existe un conflit d'identité de configuration de rapport ; et
en réponse à l'existence du conflit d'identité de configuration de rapport, attribuer une identité de configuration de rapport locale inutilisée à l'identité de configuration de rapport cellulaire, ajouter une correspondance entre l'identité de configuration de rapport cellulaire et l'identité de configuration de rapport locale à la liste de correspondance d'identité, et ajouter la configuration de rapport à la liste de configuration de mesure locale du terminal.

6. Procédé de gestion des connexions entre stations de base multiples de la revendication 1, dans lequel, en cas où le paramètre de mesure comprend une identité de mesure de cellule à supprimer dans la cellule, traiter (S103) le paramètre de mesure porté dans le signal de reconfiguration de mesure selon la liste de configuration de mesure locale du terminal et la liste de correspondance d'identité comprend :
vérifier si une identité de mesure locale réattribuée à l'identité de mesure de la cellule existe dans la liste de correspondance d'identité ;
en réponse à l'existence de l'identité de mesure locale réattribuée à l'identité de mesure cellulaire, prendre l'identité de mesure locale comme indice ; et en réponse à l'absence de l'identité de mesure locale réattribuée à l'identité de mesure cellulaire, prendre l'identité de mesure cellulaire comme indice ; et
supprimer de la liste locale des configurations de mesure du terminal une combinaison d'une identité d'objet de mesure et d'une identité de configuration de rapport, qui sont associées à l'index.

7. Procédé de gestion des connexions entre stations de base multiples de la revendication 1, dans lequel, en cas où le paramètre de mesure comprend une identité de mesure de cellule à ajouter dans la cellule, traiter (S103) le paramètre de mesure porté dans le signal de reconfiguration de mesure selon la liste de configuration de mesure locale du terminal et la liste de correspondance d'identité comprend :
comparer la mesure dans le paramètre de mesure avec la mesure effectuée localement dans la liste de configuration de mesure locale du terminal pour vérifier s'il existe un conflit d'identité de mesure, ou
comparer si une combinaison d'une identité d'objet de mesure et d'une identité de configuration de rapport, qui sont associées à une identité de mesure, dans le paramètre de mesure est identique à une combinaison d'une identité d'objet de mesure et d'une identité de configuration de rapport, qui sont associées à une identité de mesure de la mesure qui est effectuée localement ;
en réponse à l'existence du conflit d'identité de mesure ou de combinaisons identiques, attribuer une identité de mesure locale qui n'est pas utilisée avec l'identité de mesure de la cellule, et ajouter une correspondance entre l'identité de mesure de la cellule et l'identité de mesure locale à la liste de correspondance d'identité ; et
en réponse à l'existence d'au moins une identité d'objet de mesure locale réattribuée ou d'une identité de configuration de rapport local réattribuée associée à l'identité de mesure cellulaire, remplacement par au moins une identité d'objet de mesure cellulaire réattribuée ou une identité de configuration de rapport cellulaire réattribuée, et ajouter la mesure à la liste de configuration de mesure locale du terminal.

8. Procédé de gestion des connexions entre stations de base multiples de la revendication 7, dans lequel transmettre (S105) le signal de rapport de mesure à la cellule en utilisant l'identité de mesure de la cellule comprend :
effectuer une mesure locale et générer un rapport de mesure ;
recherche dans la liste de correspondance d'identité d'une identité de mesure cellulaire correspondant à une identité de mesure locale ; et
ajouter l'identité de mesure de la cellule au rapport de mesure, et transmettre le rapport de mesure à une cellule correspondant à l'identité de mesure de la cellule.

9. Procédé de gestion des connexions entre stations de base multiples de l'une quelconque des revendications 1 à 8, comprenant en outre :
en réponse à l'existence d'un conflit entre une identité de mesure, une identité de configuration de rapport ou une identité d'objet de mesure dans le paramètre de mesure et une liste de correspondance d'identité, déterminer s'il existe une ressource d'identité locale disponible ;
en réponse à l'existence de la ressource d'identité locale disponible, attribuer une identité locale à une identité en conflit ; et
en réponse à l'absence de la ressource d'identité locale disponible, transmettre à la cellule un signal de reconfiguration de mesure non valide.

10. Équipement utilisateur comprenant un processeur (31), une mémoire (32) et un bus de communication (33) ; dans lequel
le bus de communication (33) est configuré pour mettre en oeuvre des communications de connexion entre le processeur (31) et la mémoire (32) ; et
le processeur (31) est configuré pour exécuter au moins un programme stocké dans la mémoire (32) afin de mettre en oeuvre le procédé de gestion des connexions entre stations de base multiples de l'une quelconque des revendications 1 à 9.

11. Support de stockage lisible par ordinateur, stockant au moins un programme exécutable par au moins un processeur dans un équipement utilisateur pour mettre en oeuvre le procédé de gestion des connexions entre stations de base multiples de l'une quelconque des revendications 1 à 9.

12. Processeur pour un équipement utilisateur, qui est configuré pour exécuter des programmes, **caractérisé en ce que** les programmes, lorsqu'ils sont exécutés, exécutent le procédé de gestion des connexions entre stations de base multiples de l'une quelconque des revendications 1 à 9.
